Europäisches Patentamt

(19) European Patent Office

Office européen des brevets

(11) Veröffentlichungsnummer: **0 089 944**
A2

# (12) EUROPÄISCHE PATENTANMELDUNG

(21) Anmeldenummer: 83890029.8

(22) Anmeldetag: 01.03.83

(51) Int. Cl.³: **B 23 D 15/00**
**B 23 D 31/00**

(30) Priorität: 23.03.82 AT 1121/82

(43) Veröffentlichungstag der Anmeldung:
28.09.83 Patentblatt 83/39

(84) Benannte Vertragsstaaten:
BE CH DE FR GB IT LI NL

(71) Anmelder: VOEST-ALPINE Aktiengesellschaft
Werksgelände
A-4010 Linz(AT)

(72) Erfinder:
Die Erfinder haben auf ihre Nennung verzichtet

(74) Vertreter: Hübscher, Gerhard, Dipl.-Ing. et al,
Patentanwälte Dipl.-Ing. Gerhard Hübscher Dipl.-Ing.
Helmut Hübscher Dipl.-Ing. Heiner Hübscher
Spittelwiese 7
A-4020 Linz(AT)

(54) Vorrichtung zum Schneiden von Blechbändern od.dgl.

(57) Eine Vorrichtung zum Schneiden von Blechbändern weist zwei in einem Rahmen (1) verschiebbar gelagerte, miteinander verbundene und durch einen gemeinsamen Antrieb antreibbare Messer (3a, 4a) auf, die je mit einem rahmenfesten Gegenmesser (3b, 4b) zusammenwirken.

Um einerseits hohe Schnittzahlen und anderseits Einzelschnitte gewährleisten zu können, sind die antreibbaren Messer (3a, 4a) auf einem zwischen den Gegenmessern (3b, 4b) verschiebbar geführten Messerbalken (2) angeordnet. Der Antrieb für die Messer (3a, 4a) besteht dabei aus einem Kurbeltrieb, wobei der Abstand des Messerbalkens (2) von der Kurbelwelle (6) des Kurbeltriebes (5) verstellbar ist.

FIG.2

EP 0 089 944 A2

## Vorrichtung zum Schneiden von Blechbändern od. dgl.

Die Erfindung bezieht sich auf eine Vorrichtung zum Schneiden von Blechbändern od. dgl. mit zwei in einem Rahmen verschiebbar gelagerten, miteinander verbundenen und durch einen gemeinsamen Antrieb antreibbaren Messern, die je mit einem rahmenfesten Gegenmesser zusammenwirken.

Bei einer bekannten Vorrichtung dieser Art (DE-OS 2 557 584) sind die Obermesser der Doppelschere in einem gegenüber dem die Untermesser tragenden Rahmen verschiebbaren Gestell angeordnet, das mit Hilfe von am Rahmen abgestützten Hydraulikzylindern angetrieben werden kann. Damit wird es möglich, zwei übereinanderliegende Bänder gleichzeitig zu schneiden, weil die Obermesser der beiden übereinanderliegenden Scheren gemeinsam betätigt werden. Diese bekannte Vorrichtung ist auf Grund ihrer Konstruktion jedoch nur für einen gemeinsamen Schnitt beider Bänder, nicht aber für den Schnitt lediglich eines der beiden Bänder geeignet, was die Anwendung dieser bekannten Vorrichtung naturgemäß beschränkt. Außerdem ist wegen des Messerantriebes über Arbeitszylinder eine vergleichsweise geringe Schnittgeschwindigkeit gegeben, so daß die erreichbaren Schnittzahlen auf Grund des für eine ausreichende Durchtrittshöhe notwendigen Hubes vergleichsweise niedrig bleiben.

Der Erfindung liegt somit die Aufgabe zugrunde, diese Mängel zu vermeiden und eine Vorrichtung der eingangs geschilderten Art so zu verbessern, daß einerseits hohe Schnittzahlen und anderseits Einzelschnitte gewährleistet werden können.

Die Erfindung löst die gestellte Aufgabe dadurch, daß die antreibbaren Messer auf einem zwischen den Gegenmessern verschiebbar geführten Messerbalken angeordnet sind, daß der Antrieb für die Messer aus einem Kurbeltrieb besteht und daß der Abstand des Messerbalkens von der Kurbelwelle des Kurbeltriebes verstellbar ist.

Durch die Anordnung der beweglichen Messer auf einem gemeinsamen, zwischen den Gegenmessern verschiebbar geführten Messerbalken wird nicht nur eine Konstruktionsvereinfachung erzielt, sondern auch die Möglichkeit geschaffen, abwechselnd das obere und untere Blechband zu schneiden. Diese Schnittfolge ist aber nicht zwangsläufig, weil zusätzlich der Abstand des Messerbalkens von der Kurbelwelle des Messerantriebes verstellt werden kann. Durch eine Abstandsänderung des Messerbalkens von der Kurbelwelle wird nämlich eines der beiden Messer des Messerbalkens gegen das ihm zugeordnete Gegenmesser angestellt, so daß bei einem Schnitthub lediglich diese beiden Messer zusammenwirken. Der Schnitthub kann folglich vergleichsweise klein ausfallen, was rasche Schnittfolgen ermöglicht, zumal der Messerantrieb als Kurbeltrieb ausgebildet ist, der über eine Kupplung von einem Schwungrad her mit vergleichsweise geringer Leistung angetrieben werden kann. Soll das jeweils andere Band geschnitten werden, so muß vor dem Schnitthub der Abstand des Messerbalkens von der Kurbelwelle entsprechend verstellt werden. Bei einem mittleren Abstand des Messerbalkens von der Kurbelwelle wird für beide Scheren eine ausreichende Durchtrittshöhe sichergestellt, die das Einfädeln des Schnittgutes, beispielsweise Blechbänder oder Gitter, wesentlich erleichtert.

Kann der Abstand des Messerbalkens von der Kurbelwelle des Kurbeltriebes um ein die Kurbellänge des Kurbeltriebes übersteigendes Maß verstellt werden, so ergeben sich besonders kleine Schnitthübe bei vergleichsweise großen Durchtrittshöhen zwischen den zusammenwirkenden Messern. Ein Band kann daher auch bei hohen Durchlaufgeschwindigkeiten in kurze Stücke quergeteilt werden.

Um einfache Konstruktionsverhältnisse zu schaffen, kann für die Abstandsverstellung des Messerbalkens von der Kurbelwelle des Kurbeltriebes die Anlenkachse des Kurbeltriebes am Messerbalken gegenüber dem Messerbalken in Richtung der Verschiebeführung des Messerbalkens verstellbar sein. Da seitlich des Messerbalkens ausreichend Platz für eine solche Verstelleinrichtung vorhanden ist, ist der Konstrukteur hinsichtlich der Ausbildung einer solchen Verstelleinrichtung keiner besonderen Beschränkung unterworfen. Da die Abstandsverstellung jedesmal durchgeführt werden muß, wenn das jeweils andere Messerpaar zum Einsatz kommen soll, ist vorteilhaft auf eine besonders einfache Verstellmöglichkeit zu achten. Ist die Anlenkachse des Kurbeltriebes am Messerbalken mittels einer Exzenterwelle verstellbar, so kann mit einem einfachen Drehantrieb das Auslangen gefunden werden, was die Verstellung besonders rasch und einfach macht. Um einen selbsthemmenden Verstellantrieb sicherzustellen, kann die Exzenterwelle zusätzlich über einen Schneckentrieb antreibbar sein.

In der Zeichnung ist der Erfindungsgegenstand beispielsweise dargestellt. Es zeigen

Fig. 1 eine erfindungsgemäße Vorrichtung zum Schneiden von Blechbändern in einer Ansicht von vorne,

Fig. 2 diese Vorrichtung in einer Seitenansicht und die

Fig. 3 bis 5 verschiedene Arbeitsstellungen der Vorrichtung an Hand eines schematischen Querschnittes durch die Vorrichtung im Messerbereich.

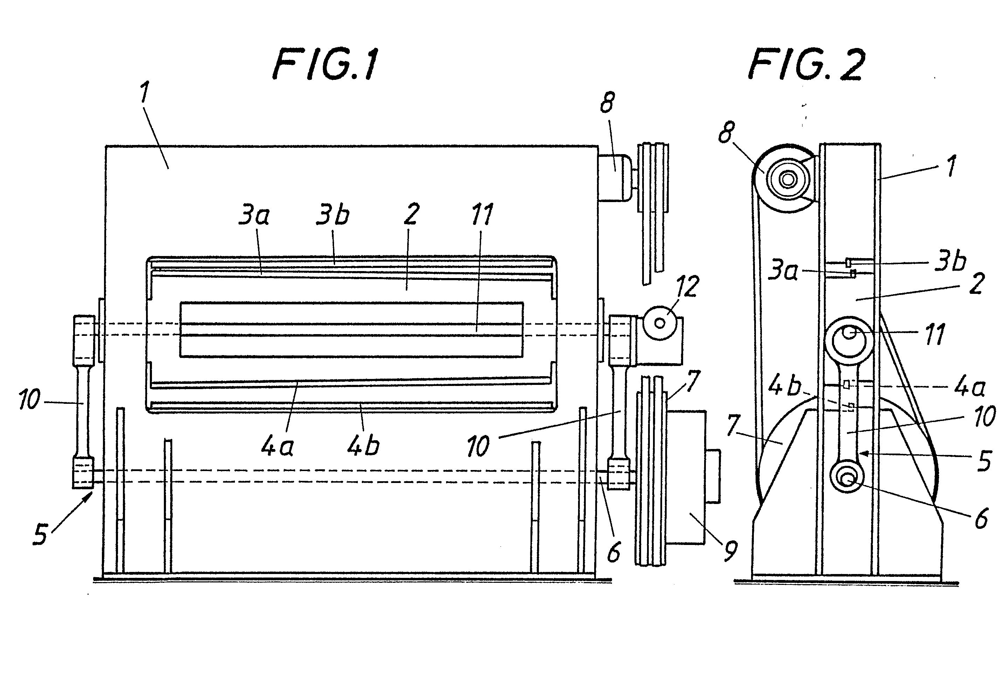

Gemäß den Fig. 1 und 2 besteht die dargestellte Vorrichtung zum Schneiden von Blechbändern aus einem Rahmen 1, in dem ein Messerbalken 2 verschiebbar geführt ist. Dieser Messerbalken 2 trägt ein oberes Messer 3a, das mit einem rahmenfesten Gegenmesser 3b zusammenwirkt, und ein unteres Messer 4a, das mit einem entsprechenden Gegenmesser 4b zusammenarbeitet. Zum Antrieb des Messerbalkens 2 ist ein Kurbeltrieb 5 vorgesehen, dessen Kurbelwelle 6 über ein Schwungrad 7 von einem Motor 8 her angetrieben werden kann. Die Antriebsverbindung zwischen dem Schwungrad 7 und der Kurbelwelle 6 erfolgt über eine Kupplung 9, die zugleich eine Bremseinheit enthält, so daß nach dem Entkuppeln die Kurbelwelle 6 in einer gewünschten Stellung angehalten werden kann.

Über die auf der Kurbelwelle 6 gelagerten Pleuelstangen 10 wird der Messerbalken 2 hin- und hergehend angetrieben, wobei jedoch der Hub vergleichsweise klein bleibt, um rasche Schnittgeschwindigkeiten sicherzustellen. Damit die Messer 3a und 4a für den Schnitt mit den entsprechenden Gegenmessern 3b und 4b zusammenwirken können, wird der Abstand des Messerbalkens 2 von der Kurbelwelle 6 entsprechend verstellt. Zu diesem Zweck wird die Anlenkachse des Kurbeltriebes 5 am Messerbalken mittels einer Exzenterwelle 11 verstellt. Diese Exzenterwelle wird dabei über einen Schneckentrieb 12 angetrieben, so daß die gewählte Drehstellung auf Grund der Selbsthemmung des Schneckentriebes erhalten bleibt.

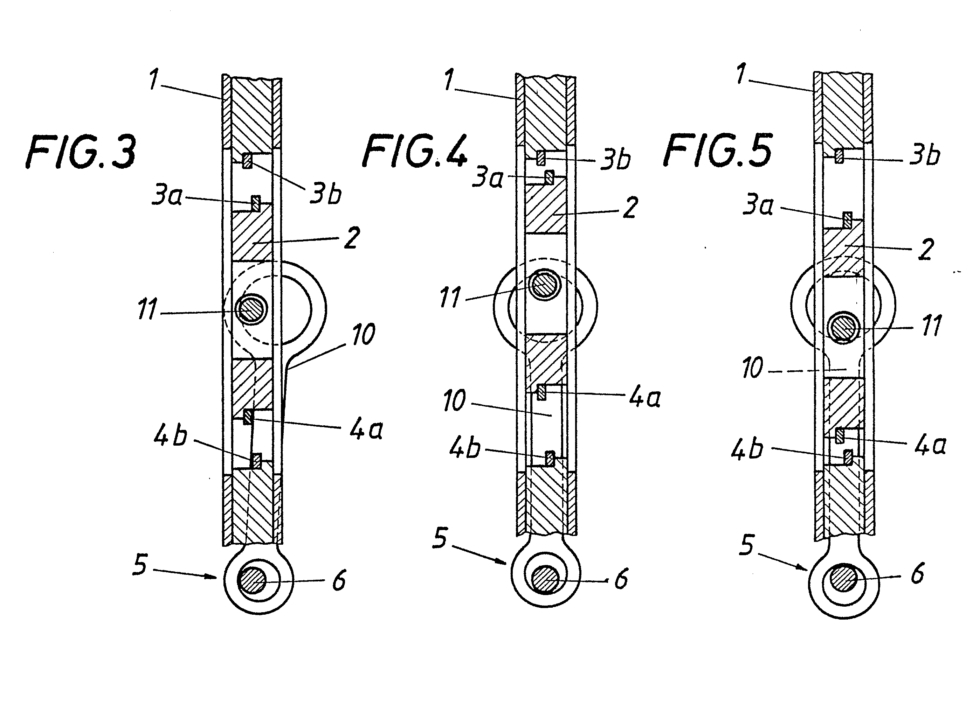

Wie der Fig. 3 entnommen werden kann, wird bei der mittleren Drehstellung der Exzenterwelle 11 eine Mittelstellung des Messerbalkens 2 erreicht, der für beide Messerpaare 3a, 3b bzw. 4a, 4b eine Durchtrittshöhe für das Einfädeln des Schnittgutes ausreichenden Ausmaßes gewährleistet. Soll aus dieser Mittelstellung heraus beispielsweise das obere der beiden Bänder geschnitten werden, so muß zunächst das Messer 3a in Arbeitsstellung gebracht werden, indem die Exzenterwelle 11 in die in Fig. 4 angedeutete Drehstellung gedreht wird. In dieser Arbeitslage wird das Messer 3a durch den Kurbeltrieb 5 in einem Schnitthub gegen das Band geführt und das Band geschnitten. Sollen mehrere Schnitte hintereinander am oberen Band durchgeführt werden, so braucht die Exzenterwelle 11 zwischen den einzelnen Schnitthüben nicht verstellt zu werden.

Bei einer Querteilung des unteren Blechbandes wird die Exzenterwelle 11 in die in Fig. 5 gezeichnete Drehstellung gebracht, in der der Abstand des Messerbalkens 2 von der Kurbelwelle 6 am kleinsten ist. In dieser Drehstellung der Exzenterwelle 11 befindet sich das untere Messer 4a des Messerbalkens 2 in seiner Arbeitslage. Da im Gegensatz zum Schneiden des oberen Bleches der Schnitthub abwärts geführt werden muß, muß auch die Ausgangslage des Kurbeltriebes 5 gegenüber der Ausgangslage beim Schneiden des oberen Bandes um 180° verdreht sein, wie dies den Fig. 4 und 5 deutlich zu entnehmen ist.

Obwohl der Rahmen 1 nach dem Ausführungsbeispiel feststehend angeordnet ist, was stillstehende Bänder während des Schnittes erfordert, ist die Erfindung selbstverständlich nicht auf solche feststehende Rahmen beschränkt. Eine entsprechende Anordnung bei Schwingrahmen, die während des Schnittes mit dem durchlaufenden Band mitbewegt werden, ist durchaus möglich und mit gleichem Vorteil anzuwenden.

Patentansprüche:

1. Vorrichtung zum Schneiden von Blechbändern od. dgl. mit zwei in einem Rahmen(1) verschiebbar gelagerten, miteinander verbundenen und durch einen gemeinsamen Antrieb antreibbaren Messern(3a,4a), die je mit einem rahmenfesten Gegenmesser(3b,4b)zusammenwirken, dadurch gekennzeichnet, daß die antreibbaren Messer (3a,4a) auf einem zwischen den Gegenmessern (3b, 4b) verschiebbar geführten Messerbalken (2) angeordnet sind, daß der Antrieb für die Messer (3a,4a) aus einem Kurbeltrieb (5) besteht und daß der Abstand des Messerbalkens (2)von der Kurbelwelle (6) des Kurbeltriebes (5) verstellbar ist.

2. Vorrichtung nach Anspruch 1, dadurch gekennzeichnet, daß der Abstand des Messerbalkens (2) von der Kurbelwelle (6) des Kurbeltriebes (5) um ein die Kurbellänge des Kurbeltriebes (5) übersteigendes Maß verstellbar ist.

3. Vorrichtung nach Anspruch 1 oder 2, dadurch gekennzeichnet, daß die Anlenkachse des Kurbeltriebes am Messerbalken (2) gegenüber dem Messerbalken (2) in Richtung der Verschiebeführung des Messerbalkens (2) verstellbar ist.

4. Vorrichtung nach Anspruch 3, dadurch gekennzeichnet, daß die Anlenkachse des Kurbeltriebes (5) am Messerbalken (2) mittels einer Exzenterwelle (11) verstellbar ist.

5. Vorrichtung nach Anspruch 4, dadurch gekennzeichnet, daß die Exzenterwelle (11) über einen Schnek-kentrieb (12) antreibbar ist.

FIG.1

FIG.2

1/2

0089944

FIG.3   FIG.4   FIG.5